# EUROPEAN PATENT APPLICATION

(11) **EP 4 478 810 A1**
(43) Date of publication of application: **18.12.2024**
(21) Application number: 22925949.4
(22) Date of filing: 10.02.2022
(51) Int. Cl.: H04W 72/04

(54) **TERMINAL AND COMMUNICATION METHOD**

(71) Applicant: NTT DOCOMO, INC., Chiyoda-ku Tokyo 100-6150 (JP)
(72) Inventor: KUMAGAI, Shinya, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2022/005510
(87) International publication number: WO 2023/152928

(57) **Abstract**

A terminal includes: a communication unit configured to perform communications according to half-duplex frequency division duplex; and a control unit configured to determine a signal to be received or transmitted in a case where there is an overlap in a time domain between a downlink signal and an uplink signal, between a downlink-to-uplink switching time and an uplink signal, or between an uplink-to-downlink switching time and a downlink signal in the communications. The downlink signal is a block including a synchronization signal and a broadcast channel, and the uplink signal is an uplink control signal repetition.

## Description

### FIELD OF THE INVENTION

The present invention relates to a terminal and a communication method in a wireless communication system.

### BACKGROUND OF THE INVENTION

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). Various radio technologies and network architectures are being discussed in order to satisfy the requirements in NR such as: a system with large capacity; high-speed data transmission; low latency; simultaneous connections of a large number of terminals; low cost; power saving; and the like (for example, Non-Patent Document 1).

In addition, in the 3GPP standardization, a new device type (hereinafter, also referred to as "RedCapUE") is being discussed as a reduced capability NR device that has lower cost and higher complexity compared with an eMBB (enhanced Mobile Broadband) device or a URLLC (Ultra-Reliable and Low Latency Communications) device. In addition, with respect to the RedCapUE, supporting of HD-FDD (Half-Duplex Frequency Division Duplex) is being discussed in order to reduce the complexity.

### Citation List

### Non-Patent Document

Non-Patent Document 1: 3GPP TS 38.300 V16.8.0 (2021-12)
Non-Patent Document 2: 3GPP TS 38.213 V17.0.0 (2021-12)
Non-Patent Document 3: 3GPP TS 38.331 V16.7.0 (2021-12)
Non-Patent Document 4: 3GPP TS 38.211 V17.0.0 (2021-12)

### SUMMARY OF THE INVENTION

### TECHNICAL PROBLEM

In a case where the RedCapUE supports HD-FDD, DL (Downlink) and UL (Uplink) are allocated in different carriers and are not simultaneously transmitted, and it is further assumed that there is DL-UL switching time. In order to satisfy the above-described limitation of HD-FDD, for example, it is necessary to specify a process for a case in which a DL synchronization signal collides with a UL channel.

The present invention has been made in view of the above points, and it is an object of the present invention to perform communications in a case where a transmission collides with a reception in the wireless communication system.

### SOLUTION TO PROBLEM

According to the disclosed technique, a terminal is provided. The terminal includes: a communication unit configured to perform communications according to half-duplex frequency division duplex; and a control unit configured to determine a signal to be received or transmitted in a case where there is an overlap in a time domain between a downlink signal and an uplink signal, between a downlink-to-uplink switching time and an uplink signal, or between an uplink-to-downlink switching time and a downlink signal in the communications. The downlink signal is a block including a synchronization signal and a broadcast channel, and the uplink signal is an uplink control signal repetition.

### ADVANTAGEOUS EFFECTS OF INVENTION

According to the disclosed technique, it is possible to perform communications in a case where a transmission collides with a reception in the time domain in the wireless communication system.

### BRIEF DESCRIPTION OF THE DRAWINGS

[Fig. 1] is a drawing for describing a wireless communication system in an embodiment of the present invention.
[Fig. 2] is a drawing for describing a duplex method in FDD.
[Fig. 3] is a drawing illustrating a process example (1) in a case where there is an overlap between channels in an embodiment of the present invention.
[Fig. 4] is a flowchart for describing a process example (1) in a case where there is an overlap between channels in an embodiment of the present invention.
[Fig. 5] is a drawing illustrating a process example (2) in a case where there is an overlap between channels in an embodiment of the present invention.
[Fig. 6] is a flowchart for describing a process example (2) in a case where there is an overlap between channels in an embodiment of the present invention.
[Fig. 7] is a drawing illustrating a process example (3) in a case where there is an overlap between channels in an embodiment of the present invention.
[Fig. 8] is a flowchart for describing a process example (3) in a case where there is an overlap between channels in an embodiment of the present invention.
[Fig. 9] is a drawing illustrating a process example (4) in a case where there is an overlap between channels in an embodiment of the present invention.
[Fig. 10] is a drawing illustrating a process example (5) in a case where there is an overlap between channels in an embodiment of the present invention.
[Fig. 11] is a drawing illustrating a process example (6) in a case where there is an overlap between channels in an embodiment of the present invention.
[Fig. 12] is a drawing illustrating a process example (7) in a case where there is an overlap between channels in an embodiment of the present invention.
[Fig. 13] is a drawing illustrating a process example (8) in a case where there is an overlap between channels in an embodiment of the present invention.
[Fig. 14] is a drawing illustrating an example of a functional configuration of a base station 10 in an embodiment of the present invention.
[Fig. 15] is a drawing illustrating an example of a functional configuration of a terminal 20 in an embodiment of the present invention.
[Fig. 16] is a drawing illustrating an example of a hardware structure of the base station 10 or the terminal 20 in an embodiment of the present invention.

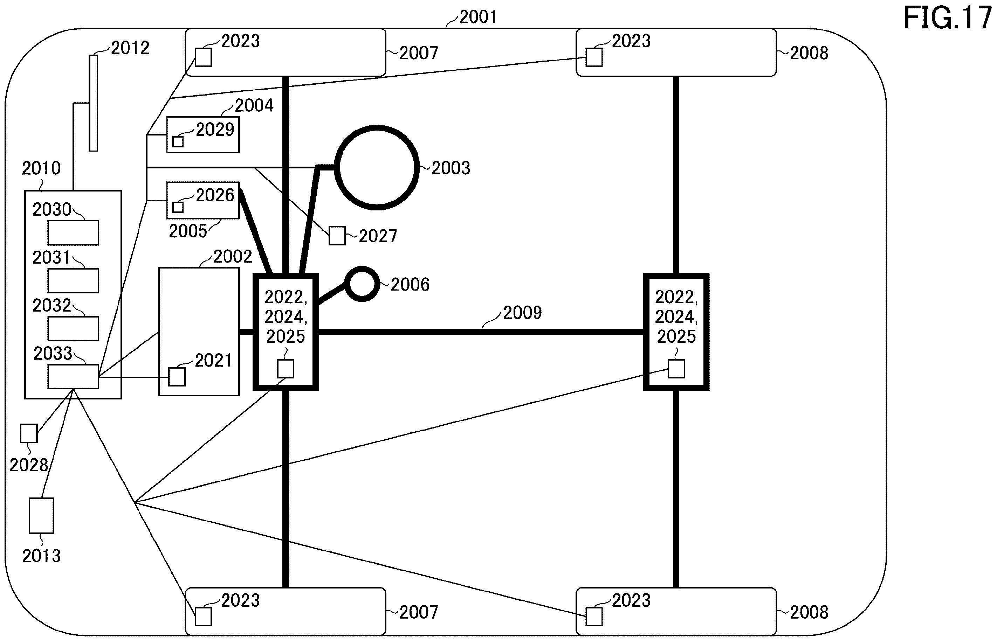

[Fig. 17] is a drawing illustrating an example of a structure of a vehicle 2001 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

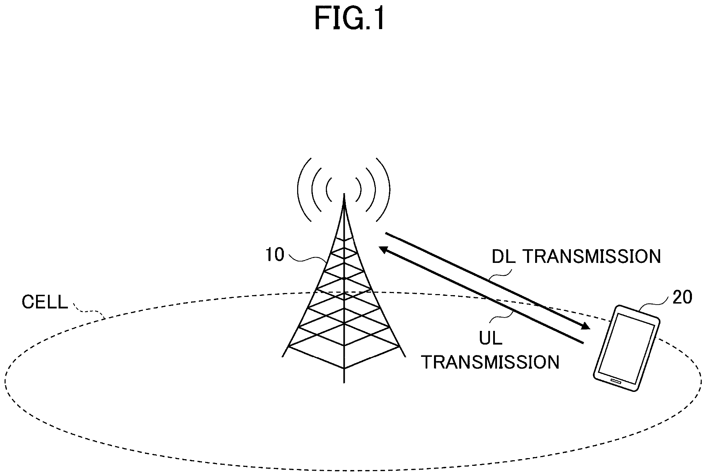

Fig. 1 is a drawing illustrating a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of subcarriers or resource blocks. In addition, a TTI (Transmission Time Interval) in the time domain may be a slot or a sub-slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. SSB (SS/PBCH block) including NR-PSS, NR-SSS, and NR-PBCH may be transmitted from the base station 10 to the terminal 20. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

In the 3GPP standardization, a new device type (hereinafter, also referred to as "RedCapUE") is being discussed as a reduced capability NR device that has lower cost and higher complexity compared with an eMBB (enhanced Mobile Broadband) device or a URLLC (Ultra-Reliable and Low Latency Communications) device.

For example, the maximum bandwidth supported by the RedCapUE may be small. For example, in FR1 (Frequency Range 1), the maximum bandwidth of the RedCapUE during and after the initial access may be 20 MHz. For example, in FR2 (Frequency Range 2), the maximum bandwidth of the RedCapUE during and after the initial access may be 100 MHz.

For example, the RedCapUE may support a smaller number of reception branches. For example, the number of branches supported by the RedCapUE may be 1 or 2. In addition, the maximum number of MIMO layers supported by the RedCapUE may be small. For example, the number of MIMO layers supported by the RedCapUE may be 1 or 2. In addition, the modulation order supported by the RedCapUE may be small. For example, supporting of 256QAM (Quadrature amplitude modulation) in FR1 may be optional for the RedCapUE.

In addition, with respect to the RedCapUE, supporting of HD-FDD (Half-Duplex Frequency Division Duplex) is being discussed in order to reduce the complexity.

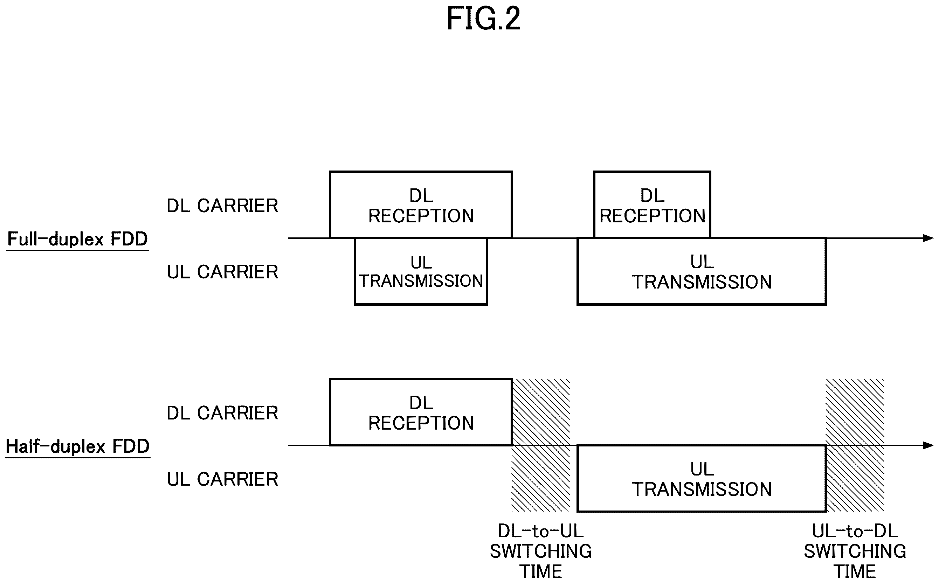

Fig. 2 is a drawing for describing a duplex method in FDD. As illustrated in Fig. 2, in the Full-duplex FDD, the DL carrier and the UL carrier are allocated in different frequencies, and the simultaneous transmission and reception can be performed. On the other hand, in the HD-FDD (Half-Duplex Frequency Division Duplex), the DL carrier and the UL carrier are allocated in different frequencies, the simultaneous transmission and reception cannot be performed, and the DL-UL switching time is required. The duplexer can be eliminated in the HD-FDD and a switch and an additional filter are used instead.

In the HD-FDD, it is particularly necessary to discuss about a DL-to-UL switching time, a UL-to-DL switching time, and DL/UL collisions.

In addition, the RedCapUE that supports HD-FDD may perform an operation as described in the following a) to d) (refer to non-patent document 2).

a) The RedCapUE is not required to have a capability of simultaneously performing transmission and reception in the serving cell of the FDD band (paired spectrum).
b) The RedCapUE is not expected to detect both a DCI (Downlink Control Information) format for scheduling reception in a set of one or more symbols and a DCI format for scheduling transmission in one of the set of one or more symbols.
c) The RedCapUE may try to transmit PUSCH, PUCCH, or SRS (Sounding Reference Signal) based on the configuration by an upper layer, or the presence of an SS/PBCH block may be indicated to the RedCapUE via ssb-PositionsInBurst or ServingCellConfigCommon included in SIB1 (refer to non-patent document 3). In a case where both of the above operations are performed, the RedCapUE is not required to further transmit a channel or signal that is described in the following 1) to 4).
   1) PUSCH or PUCCH in a case where the last symbol of the PUSCH transmission or PUCCH transmission is not included in a period between a first symbol of the next earliest SS/PBCH block and a time point of at least N_{TX-RX} · T_{C} (refer to non-patent document 4) prior to the first symbol of the next earliest SS/PBCH block.
   2) PUSCH or PUCCH in a case where the first symbol of the PUSCH transmission or PUCCH transmission is not included in a period between a last symbol of the previous latest SS/PBCH block and a time point of at least N_{RX-TX} · T_{C} (refer to non-patent document 4) after the last symbol of the previous latest SS/PBCH block.
   3) SRS symbol that is not included in a period between a first symbol of the next earliest SS/PBCH block and a time point of at least N_{TX-RX} · Tc) prior to the first symbol of the next earliest SS/PBCH block.
   4) SRS symbol that is not included in a period between a last symbol of the previous latest SS/PBCH block and a time point of at least N_{RX-TX} · T_{C} after the last symbol of the previous latest SS/PBCH block.
d) The RedCapUE may try to transmit PUSCH, PUCCH, PRACH, or SRS based on the detected DCI format, or the presence of an SS/PBCH block in a set of one or more symbols may be indicated to the RedCapUE via ssb-PositionsInBurst or ServingCellConfigCommon included in SIB1. In a case where both of the above operations are performed, the RedCapUE is not required to further transmit PUSCH, PUCCH, or PRACH in a case where one of the set of symbols overlaps with the transmission. In addition, the RedCapUE is not required to transmit an SRS symbol that overlaps with one of the set of symbols.

In addition, in a case where an SSB overlaps with a scheduled UL other than Msg3 and Msg4 HARQ-ACK, the RedCapUE that supports HD-FDD may cancel transmission of the scheduled UL.

In addition, in a case where an SSB overlaps with a configured UL other than the valid RO, the RedCapUE that supports HD-FDD may cancel transmission of the configured UL.

In TDD, a normal UE (non-RedCapUE) may determine a number of slots for PUCCH transmission repetition starting from a slot indicated for the HARQ-ACK reporting, SR reporting, or CSI reporting (refer to non-patent document 2). In addition, the slots for PUCCH transmission repetition may have a UL symbol or a flexible symbol that is not a SS/PBCH block symbol indicated by startingSymbolIndex (refer to non-patent document 3) as a first symbol, and may have consecutive UL symbols or flexible symbols that are not SS/PBCH block symbols, that start from the first symbol, and a number of that is equal to or greater than the number of symbols indicated by nrofsymbols (refer to non-patent document 3).

In addition, in TDD, with respect to a PUCCH repetition in a case where the number of slots for the PUCCH transmission repetition exceeds one (1), transmission of the PUCCH repetition may be postponed to the next available slot in a case where the PUCCH repetition collides with an SSB symbol or a DL symbol that is indicated by tdd-UL-DL-ConfigurationCommon or tdd-UL-DL-ConfigurationDedicated (refer to non-patent document 3).

As described above, in TDD, in a case where a PUCCH repetition collides with an SSB symbol or a DL symbol that is indicated by tdd-UL-DL-ConfigurationCommon or tdd-UL-DL-ConfigurationDedicated, transmission of the PUCCH repetition is postponed to the next available slot. On the other hand, in FDD, a case has not been taken into account in which there is an overlap in the time domain between an SSB symbol and the PUCCH repetition because FD (Full Duplex)-FDD is assumed in the conventional case.

Therefore, it is necessary to clarify a UE operation in a case where there is an overlap in the time domain between an SSB symbol and the PUCCH repetition in HD-FDD. It is to be noted that a DL symbol is not indicated by tdd-UL-DL-ConfigurationCommon or tdd-UL-DL-ConfigurationDedicated in FDD, and thus, a UE operation is required to be discussed separately in an embodiment of the present invention.

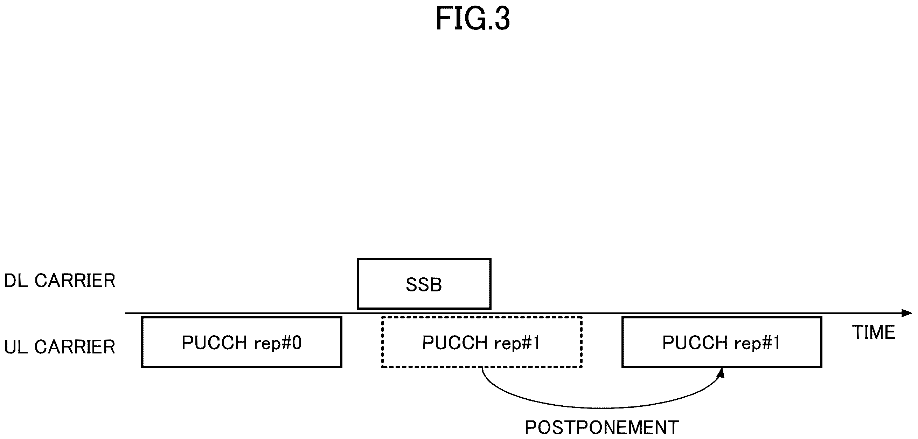

Fig. 3 is a drawing illustrating a process example (1) in a case where there is an overlap between channels in an embodiment of the present invention. As illustrated in Fig. 3, in a case where there is an overlap between an SSB and a PUCCH repetition, transmission of the PUCCH repetition may be postponed to the next slot. This operation is referred to as an option 1. As illustrated in Fig. 3, in a case where the transmission of the PUCCH repetition is postponed to the next slot, the postponed PUCCH#rep 1 is transmitted in the next slot, and thus, the total number of PUCCH repetition transmissions does not decrease.

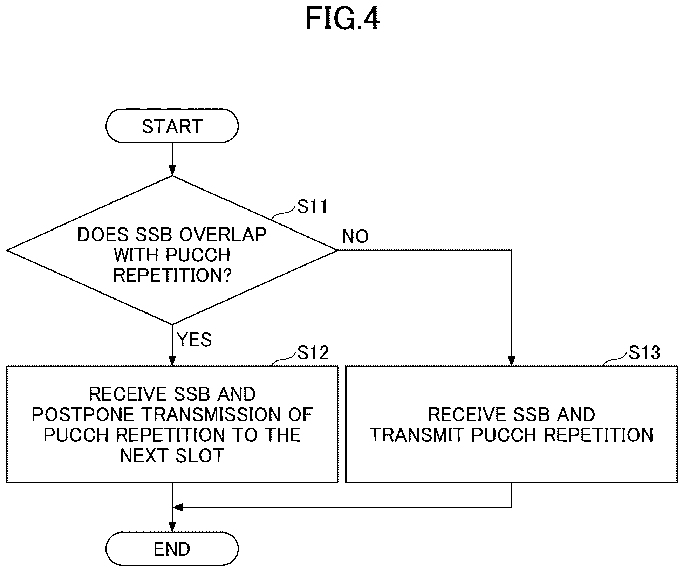

Fig. 4 is a flowchart for describing a process example (1) in a case where there is an overlap between channels in an embodiment of the present invention. In step S11, the terminal 20 determines whether or not there is an overlap between an SSB and a PUCCH repetition. In a case where there is an overlap between an SSB and a PUCCH repetition (YES in S11), the flow proceeds to step S12, and in a case where there is no overlap between an SSB and a PUCCH repetition, the flow proceeds to step S13.

In step S12, the terminal 20 receives the SSB and postpones transmission of the PUCCH repetition to the next slot. Subsequently, the terminal 20 transmits the PUCCH repetition in the next slot. On the other hand, in step S13, the terminal 20 receives the SSB and transmits the PUCCH repetition.

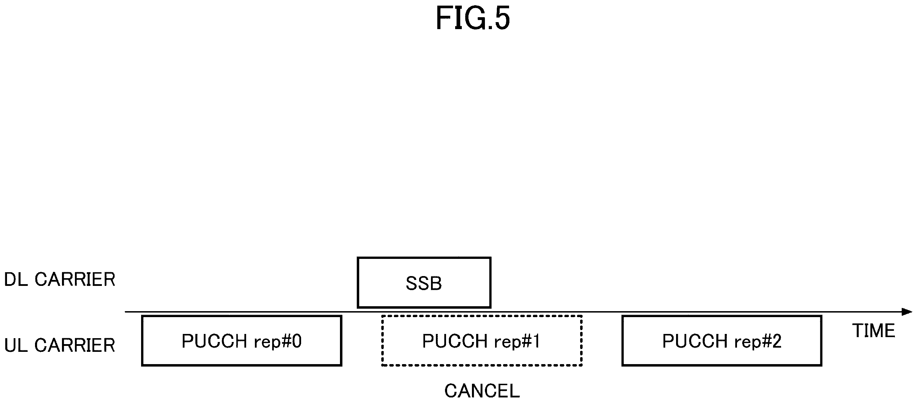

Fig. 5 is a drawing illustrating a process example (2) in a case where there is an overlap between channels in an embodiment of the present invention. As illustrated in Fig. 5, in a case where there is an overlap between an SSB and a PUCCH repetition, transmission of the PUCCH repetition may be canceled. This operation is referred to as an option 2. As illustrated in Fig. 5, transmission of PUCCH#rep 1 is canceled and PUCCH#rep2 is transmitted in the next slot, and thus, the total number of PUCCH repetition transmissions decreases by 1.

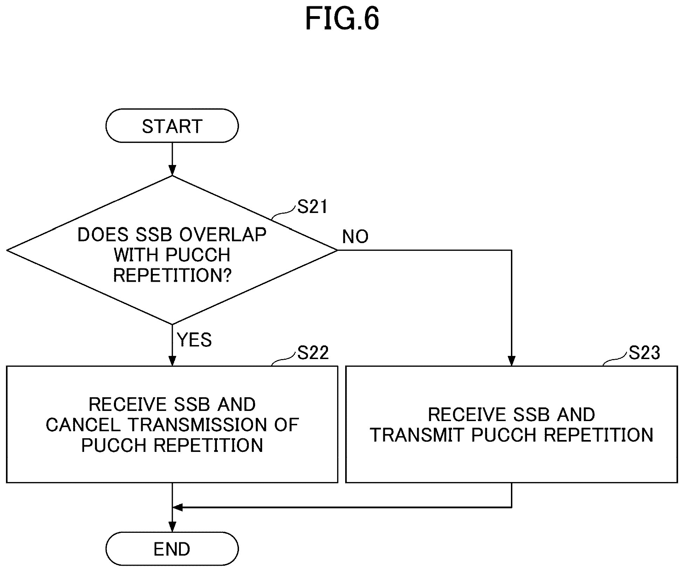

Fig. 6 is a flowchart for describing a process example (2) in a case where there is an overlap between channels in an embodiment of the present invention. In step S21, the terminal 20 determines whether or not there is an overlap between an SSB and a PUCCH repetition. In a case where there is an overlap between an SSB and a PUCCH repetition (YES in S21), the flow proceeds to step S22, and in a case where there is no overlap between an SSB and a PUCCH repetition, the flow proceeds to step S23.

In step S22, the terminal 20 receives the SSB and cancels transmission of the PUCCH repetition. On the other hand, in step S23, the terminal 20 receives the SSB and transmits the PUCCH repetition.

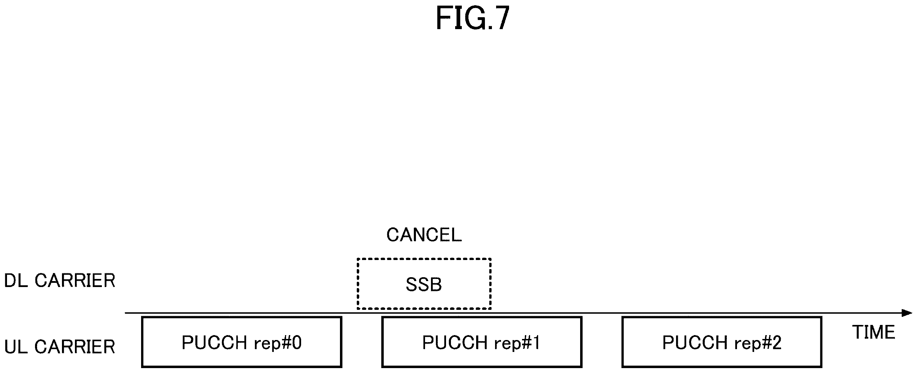

Fig. 7 is a drawing illustrating a process example (3) in a case where there is an overlap between channels in an embodiment of the present invention. As illustrated in Fig. 7, in a case where there is an overlap between an SSB and a PUCCH repetition, reception of the SSB may be canceled. This operation is referred to as an option 3.

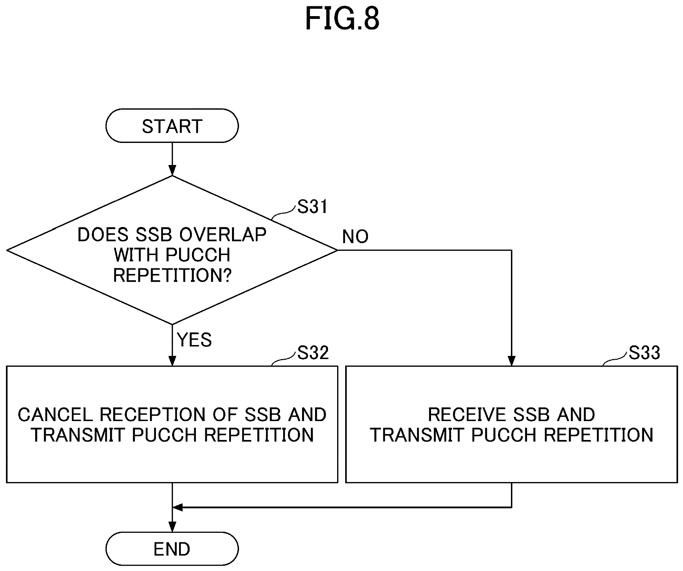

Fig. 8 is a flowchart for describing a process example (3) in a case where there is an overlap between channels in an embodiment of the present invention. In step S31, the terminal 20 determines whether or not there is an overlap between an SSB and a PUCCH repetition. In a case where there is an overlap between an SSB and a PUCCH repetition (YES in S31), the flow proceeds to step S32, and in a case where there is no overlap between an SSB and a PUCCH repetition, the flow proceeds to step S33.

In step S32, the terminal 20 cancels reception of the SSB and transmits the PUCCH repetition. On the other hand, in step S23, the terminal 20 receives the SSB and transmits the PUCCH repetition.

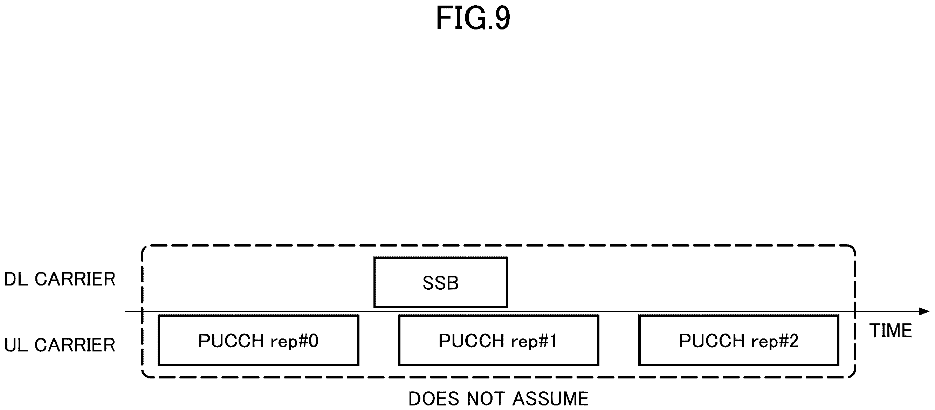

Fig. 9 is a drawing illustrating a process example (4) in a case where there is an overlap between channels in an embodiment of the present invention. As illustrated in Fig. 9, the terminal 20 is not required to expect a case where there is an overlap between an SSB and a PUCCH repetition. This operation is referred to as an option 4.

It is to be noted that the option to be applied may be the same or different depending on the type of UCI transmitted via PUCCH (HARQ-ACK/SR/CSI). The option to be applied may be the same or different depending on whether the PUCCH is a PUCCH whose transmission is indicated by DCI or a PUCCH whose transmission is configured by an upper layer.

For example, in a case of a scheduled/configured PUCCH repetition that carries HARQ-ACK, an option 1 may be applied, and, in a case of a scheduled/configured PUCCH repetition that carries CSI, an option 2 may be applied.

The above-described options from option 1 to option 4 may be applied to a case in which there is no overlap between an SSB and a PUCCH repetition but the transmission and reception switching time is not satisfied.

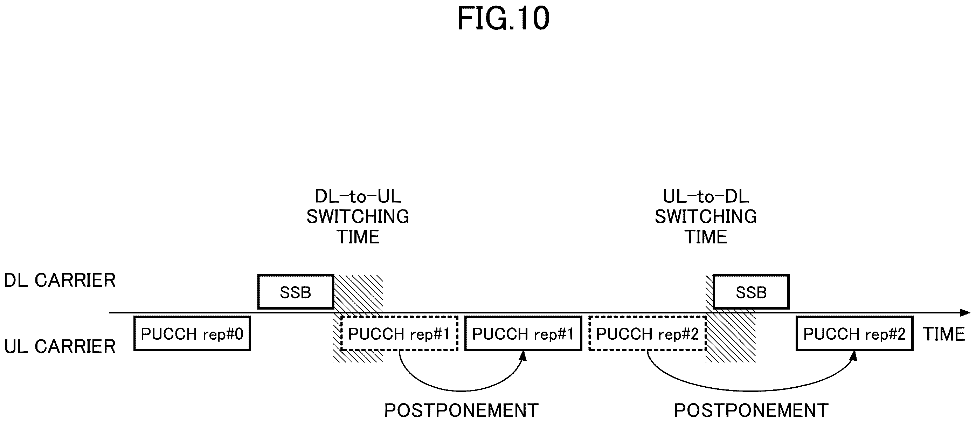

Fig. 10 is a drawing illustrating a process example (5) in a case where there is an overlap between channels in an embodiment of the present invention. Fig. 10 is an example to which the above-described option 1 is to be applied. For example, as illustrated in Fig. 10, in a case where there is an overlap between: the DL-to-UL switching time immediately after an SSB; and a PUCCH repetition, transmission of the PUCCH repetition may be postponed to the next slot. In addition, for example, as illustrated in Fig. 10, in a case where there is an overlap between: the UL-to-DL switching time immediately after a PUCCH repetition; and an SSB, transmission of the PUCCH repetition may be postponed to the next slot.

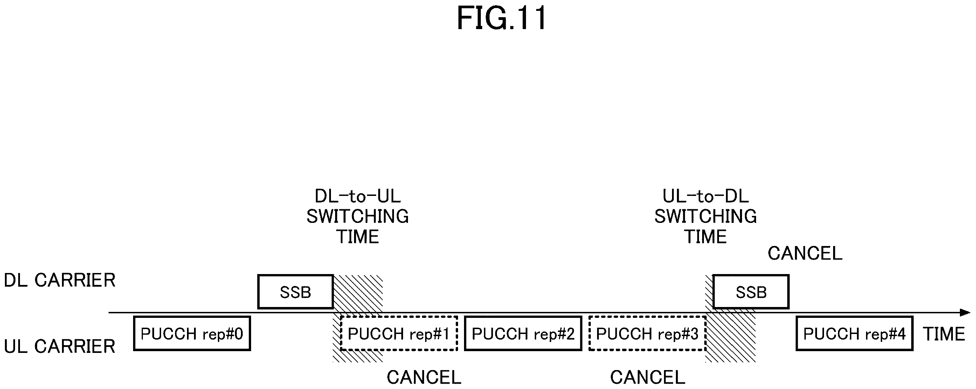

Fig. 11 is a drawing illustrating a process example (6) in a case where there is an overlap between channels in an embodiment of the present invention. Fig. 11 is an example to which the above-described option 2 is to be applied. For example, as illustrated in Fig. 10, in a case where there is an overlap between: the DL-to-UL switching time immediately after an SSB; and a PUCCH repetition, transmission of the PUCCH repetition may be canceled. In addition, for example, as illustrated in Fig. 10, in a case where there is an overlap between: the UL-to-DL switching time immediately after a PUCCH repetition; and an SSB, transmission of the PUCCH repetition may be canceled.

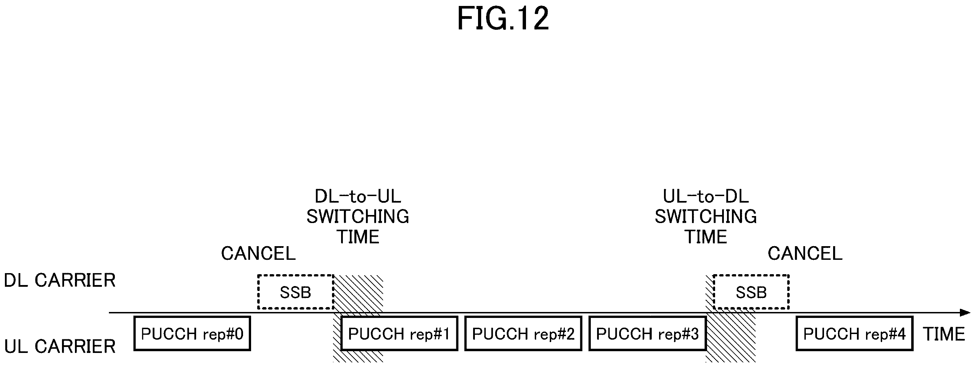

Fig. 12 is a drawing illustrating a process example (7) in a case where there is an overlap between channels in an embodiment of the present invention. Fig. 12 is an example to which the above-described option 3 is to be applied. For example, as illustrated in Fig. 10, in a case where there is an overlap between the DL-to-UL switching time immediately after an SSB; and a PUCCH repetition, reception of the SSB may be canceled. In addition, for example, as illustrated in Fig. 10, in a case where there is an overlap between: the UL-to-DL switching time immediately after a PUCCH repetition; and an SSB, reception of the SSB may be canceled.

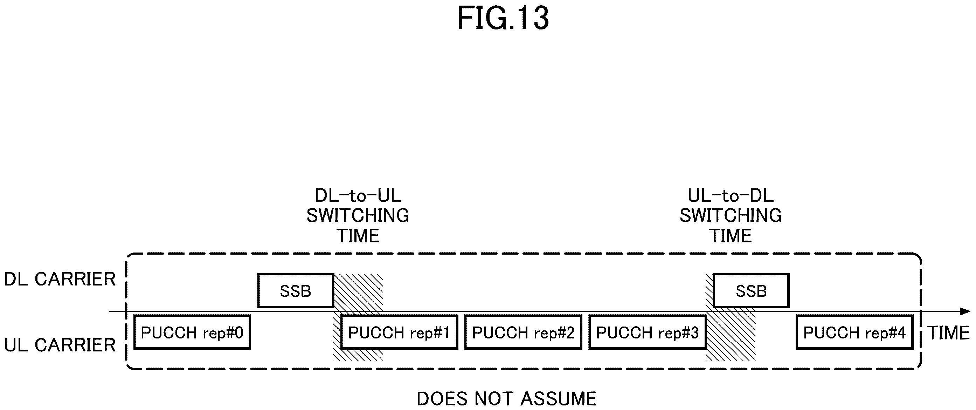

Fig. 13 is a drawing illustrating a process example (8) in a case where there is an overlap between channels in an embodiment of the present invention. Fig. 13 is an example to which the above-described option 3 is to be applied. For example, as illustrated in Fig. 10, a case where there is an overlap between the DL-to-UL switching time immediately after an SSB and a PUCCH repetition, or a case where there is an overlap between the UL-to-DL switching time immediately after a PUCCH repetition and an SSB is not required to be assumed.

In an operation of the RedCapUE illustrated in Fig. 10, Fig. 11, Fig. 12, or Fig. 13, options to be applied (option 1 to option 4) may be the same or may be different depending on a case where the DL-to-UL switching time is not satisfied or a case where the UL-to-DL switching time is not satisfied.

According to an embodiment of the present invention, an overlap in the time domain between an SSB reception and a PUCCH repetition transmission can be resolved in a case where the RedCapUE supports HD-FDD. In addition, an operation can be determined for a case where the RedCapUE supports HD-FDD and there is an overlap between an SSB reception and the UL-to-DL switching time or for a case where the RedCapUE supports HD-FDD and there is an overlap between a PUCCH repetition transmission the DL-to-UL switching time.

In other words, it is possible to perform communications in a case where a transmission collides with a reception in the time domain in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only one of the functions in an embodiment of the present invention.

### <Base station 10>

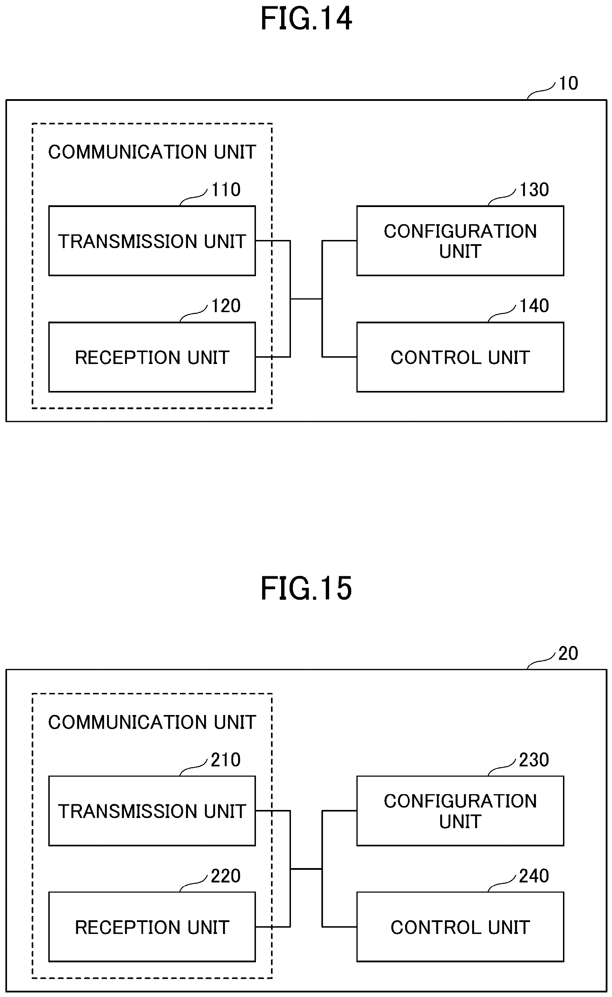

Fig. 14 is a diagram illustrating an example of a functional configuration of the base station 10. As shown in Fig. 14, the base station 10 includes a transmission unit 110, a reception unit 120, a configuration unit 130, and a control unit 140. The functional configuration illustrated in Fig. 14 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus as necessary. The control unit 140 performs, for example, resource allocation and control of the entire base station 10. Note that the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 15 is a diagram illustrating an example of a functional configuration of the terminal 20. As shown in Fig. 15, the terminal 20 includes a transmission unit 210, a reception unit 220, a configuration unit 230, and a control unit 240. The functional configuration illustrated in Fig. 15 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20. Note that the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### (Hardware structure)

In the above block diagrams used for describing an embodiment of the present invention (Fig. 14 and Fig. 15), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

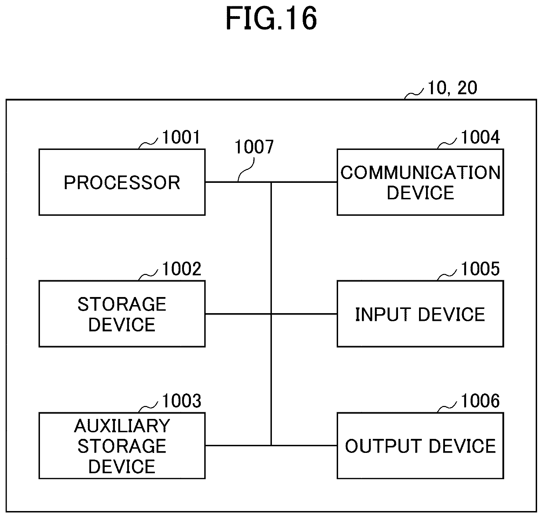

For example, the base station 10, the terminal 20, etc., according to an embodiment of the present disclosure may function as a computer for processing the radio communication method of the present disclosure. Fig. 16 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may not include some devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 14 may be realized by control programs that are stored in the storage device 1002 and are executed by the processor 1001. Further, for example, the control unit 240 of the terminal 20 illustrated in Fig. 15 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc R OM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

Fig. 14 shows an example of a configuration of a vehicle 2001. As shown in Fig. 14, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing a driver's operating burden such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a communication unit configured to perform communications according to half-duplex frequency division duplex; and a control unit configured to determine a signal to be received or transmitted in a case where there is an overlap in a time domain between a downlink signal and an uplink signal, between a downlink-to-uplink switching time and an uplink signal, or between an uplink-to-downlink switching time and a downlink signal in the communications. The downlink signal is a block including a synchronization signal and a broadcast channel, and the uplink signal is an uplink control signal repetition.

According to the above-described configuration, an overlap in the time domain between an SSB reception and a PUCCH repetition transmission can be resolved in a case where the RedCapUE supports HD-FDD. In addition, an operation can be determined for a case where the RedCapUE supports HD-FDD and there is an overlap between an SSB reception and the UL-to-DL switching time or for a case where the RedCapUE supports HD-FDD and there is an overlap between a PUCCH repetition transmission the DL-to-UL switching time. In other words, it is possible to perform communications in a case where a transmission collides with a reception in the time domain in the wireless communication system.

The control unit may determine to receive the block and to postpone transmission of the control signal repetition to a subsequent slot in a case where there is an overlap in the time domain between the block and the control signal repetition in the communications. According to the above-described configuration, an overlap in the time domain between an SSB reception and a PUCCH repetition transmission can be resolved in a case where the RedCapUE supports HD-FDD.

The control unit may determine to receive the block and to cancel transmission of the control signal repetition in a case where there is an overlap in the time domain between the block and the control signal repetition in the communications. According to the above-described configuration, an overlap in the time domain between an SSB reception and a PUCCH repetition transmission can be resolved in a case where the RedCapUE supports HD-FDD.

The control unit may postpone transmission of the control signal repetition to a subsequent slot in a case where there is an overlap in the time domain between the control signal repetition and the downlink-to-uplink switching time in the communications or in a case where there is an overlap between the block and the uplink-to-downlink switching time in the communications. According to the above-described configuration, an operation can be determined for a case where the RedCapUE supports HD-FDD and there is an overlap between an SSB reception and the UL-to-DL switching time or for a case where the RedCapUE supports HD-FDD and there is an overlap between a PUCCH repetition transmission the DL-to-UL switching time.

The control unit may cancel the transmission of the control signal repetition in a case where there is an overlap in the time domain between the control signal repetition and the downlink-to-uplink switching time in the communications or in a case where there is an overlap between the block and the uplink-to-downlink switching time in the communications. According to the above-described configuration, an operation can be determined for a case where the RedCapUE supports HD-FDD and there is an overlap between an SSB reception and the UL-to-DL switching time or for a case where the RedCapUE supports HD-FDD and there is an overlap between a PUCCH repetition transmission the DL-to-UL switching time.

In addition, according to an embodiment of the present invention, a communication method performed by a terminal is provided. The communication method includes: performing communications according to half-duplex frequency division duplex; and determining a signal to be received or transmitted in a case where there is an overlap in a time domain between a downlink signal and an uplink signal, between a downlink-to-uplink switching time and an uplink signal, or between an uplink-to-downlink switching time and a downlink signal in the communications. The downlink signal is a block including a synchronization signal and a broadcast channel, and the uplink signal is an uplink control signal repetition.

According to the above-described configuration, an overlap in the time domain between an SSB reception and a PUCCH repetition transmission can be resolved in a case where the RedCapUE supports HD-FDD. In addition, an operation can be determined for a case where the RedCapUE supports HD-FDD and there is an overlap between an SSB reception and the UL-to-DL switching time or for a case where the RedCapUE supports HD-FDD and there is an overlap between a PUCCH repetition transmission the DL-to-UL switching time. In other words, it is possible to perform communications in a case where a transmission collides with a reception in the time domain in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, and each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a communication unit configured to perform communications according to half-duplex frequency division duplex; and
a control unit configured to determine a signal to be received or transmitted in a case where there is an overlap in a time domain between a downlink signal and an uplink signal, between a downlink-to-uplink switching time and an uplink signal, or between an uplink-to-downlink switching time and a downlink signal in the communications, wherein
the downlink signal is a block including a synchronization signal and a broadcast channel, and
the uplink signal is an uplink control signal repetition.

2. The terminal as claimed in claim 1, wherein
the control unit determines to receive the block and to postpone transmission of the control signal repetition to a subsequent slot in a case where there is an overlap in the time domain between the block and the control signal repetition in the communications.

3. The terminal as claimed in claim 1, wherein
the control unit determines to receive the block and to cancel transmission of the control signal repetition in a case where there is an overlap in the time domain between the block and the control signal repetition in the communications.

4. The terminal as claimed in claim 2, wherein
the control unit postpones transmission of the control signal repetition to a subsequent slot in a case where there is an overlap in the time domain between the control signal repetition and the downlink-to-uplink switching time in the communications or in a case where there is an overlap between the block and the uplink-to-downlink switching time in the communications.

5. The terminal as claimed in claim 3, wherein
the control unit cancels the transmission of the control signal repetition in a case where there is an overlap in the time domain between the control signal repetition and the downlink-to-uplink switching time in the communications or in a case where there is an overlap between the block and the uplink-to-downlink switching time in the communications.

6. A communication method performed by a terminal, the communication method comprising:
performing communications according to half-duplex frequency division duplex; and
determining a signal to be received or transmitted in a case where there is an overlap in a time domain between a downlink signal and an uplink signal, between a downlink-to-uplink switching time and an uplink signal, or between an uplink-to-downlink switching time and a downlink signal in the communications, wherein
the downlink signal is a block including a synchronization signal and a broadcast channel, and
the uplink signal is an uplink control signal repetition.
